(19)

Europäisches
Patentamt
European
Patent Office
Office européen
des brevets

(11) **EP 2 811 740 A1**

(12) **EUROPEAN PATENT APPLICATION**
published in accordance with Art. 153(4) EPC

(43) Date of publication:
**10.12.2014 Bulletin 2014/50**

(21) Application number: **13805059.6**

(22) Date of filing: **13.06.2013**

(51) Int Cl.:
***H04N 7/18*** *(2006.01)*      ***G06F 17/30*** *(2006.01)*

(86) International application number:
**PCT/CN2013/077183**

(87) International publication number:
**WO 2013/185617 (19.12.2013 Gazette 2013/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.06.2012 CN 201210189742**

(71) Applicant: **Huawei Technologies Co., Ltd.
Shenzhen, Guangdong 518129 (CN)**

(72) Inventors:
• **PENG, Song
  Shenzhen
  Guangdong 518129 (CN)**
• **SONG, Liyan
  Shenzhen
  Guangdong 518129 (CN)**

(74) Representative: **Pfenning, Meinig & Partner GbR
Patent- und Rechtsanwälte
Theresienhöhe 11a
80339 München (DE)**

(54) **VIDEO ACQUISITION METHOD, DEVICE AND SYSTEM**

(57)     Embodiments of the present invention provide a video obtaining method, device, and system. The video obtaining method includes: obtaining a visual interface from a management server, where the visual interface includes a geographic information system GIS map, and a plurality of camera resource points and a monitoring range corresponding to each of the camera resource points are displayed on the GIS map; and detecting a user clicking action, obtaining a coordinate parameter of the user clicking action, and if the coordinate parameter is within a monitoring range, sending the coordinate parameter to the management server, so as to obtain a real-time video of a position corresponding to the coordinate parameter. According to the video obtaining method, device, and system provided in the embodiments of the present invention, by displaying the monitoring range corresponding to each of the camera resource points, a user can view a real-time video of any position within the monitoring range and can rapidly obtain the real-time video of the position only through one clicking action without the need for a further operation, thereby greatly simplifying an operation procedure.

Obtain a visual interface from a management server, where the visual interface includes a geographic information system GIS map — A10

Detect a user clicking action, obtain a coordinate parameter of the user clicking action, and if the coordinate parameter is within a monitoring range, send the coordinate parameter to the management server, so as to obtain a real-time video of a position corresponding to the coordinate parameter — A20

FIG. 1

EP 2 811 740 A1

**Description**

**CROSS-REFERENCE TO RELATED APPLICATION**

This application claims priority to Chinese Patent Application No. 201210189742.4, filed with the Chinese Patent Office on June 11, 2012 and entitled "VIDEO OBTAINING METHOD, DEVICE, AND SYSTEM", which is incorporated herein by reference in its entirety.

**TECHNICAL FIELD**

Embodiments of the present invention relate to the field of communications technologies, and in particular, to a video obtaining method, device, and system.

**BACKGROUND**

A geographic information system (Geographic Information System, GIS for short), in a security surveillance system in the prior art, a map function of the GIS is often used. A GIS map may visually display information of a site, such as topography and buildings. The GIS map usually supports adding of a camera resource point to the map, that is, an icon is added to a position where a camera is actually installed, and through some basic configurations, the icon can be corresponding to a video of a site to establish a quick link. A user can view a real-time video of the site by clicking the link.

During an actual application, if a user intends to visually view a real-time video of a site on an interface of a GIS map, the user needs to click a camera icon on the GIS map first, and then the real-time video of the site is displayed; and if the user needs to view a video of a specific position, the user further needs to perform adjustment by using a pan-tilt-zoom control button, which requires a large number of steps and complex operations.

**SUMMARY**

Embodiments of the present invention provide a video obtaining method, device, and system, so as to rapidly obtain a real-time video of a position to be viewed and simplify an operation procedure.

An embodiment of the present invention provides a video obtaining method, including:

obtaining a visual interface from a management server, where the visual interface includes a geographic information system GIS map, and a plurality of camera resource points and a monitoring range corresponding to each of the camera resource points are displayed on the GIS map; and
detecting a user clicking action, obtaining a coordinate parameter of the user clicking action, and if the coordinate parameter is within a monitoring range, sending the coordinate parameter to the management server, so as to obtain a real-time video of a position corresponding to the coordinate parameter.

An embodiment of the present invention provides a video obtaining method, including:

sending a visual interface to a terminal device, where the visual interface includes a geographic information system GIS map, and a plurality of camera resource points and a monitoring range corresponding to each of the camera resource points are displayed on the GIS map;
determining a to-be-adjusted camera resource point and an adjustment parameter according to a received coordinate parameter sent by the terminal device, and adjusting a camera of the to-be-adjusted camera resource point according to the adjustment parameter, so that the adjusted camera collects a real-time video of a position corresponding to the coordinate parameter; and
obtaining the real-time video collected by the adjusted camera resource point, and sending the real-time video to the terminal device.

An embodiment of the present invention provides a terminal device, including:

a visual interface unit, configured to obtain a visual interface from a management server, where the visual interface includes a geographic information system GIS map, and a plurality of camera resource points and a monitoring range corresponding to each of the camera resource points are displayed on the GIS map; and
a processing unit, configured to detect a user clicking action, obtain a coordinate parameter of the user clicking action, and if the coordinate parameter is within a monitoring range, send the coordinate parameter to the management server, so as to obtain a real-time video of a position corresponding to the coordinate parameter.

An embodiment of the present invention provides a management server, including:

a visual interface sending unit, configured to send a visual interface to a terminal device, where the visual interface includes a geographic information system GIS map, and a plurality of camera resource points and a monitoring range corresponding to each of the camera resource points are displayed on the GIS map;

an adjusting unit, configured to determine a to-be-adjusted camera resource point and an adjustment parameter according to a received coordinate parameter sent by the terminal device, and adjust a camera of the to-be-adjusted camera resource point according to the adjustment parameter, so that the adjusted camera collects a real-time video of a position corresponding to the coordinate parameter; and

a video sending unit, configured to obtain the real-time video collected by the adjusted camera resource point, and send the real-time video to the terminal device.

An embodiment of the present invention provides a video obtaining system, including:

the terminal device provided in the embodiment of the present invention and the management server provided in the embodiment of the present invention.

It can be seen from the foregoing technical solutions that, according to the video obtaining method, device, and system provided in the embodiments of the present invention, a terminal device obtains a visual interface from a management server, where the visual interface includes a geographic information system GIS map, and a plurality of camera resource points and a monitoring range corresponding to each of the camera resource points are displayed on the GIS map; and the terminal device detects a user clicking action, obtains a coordinate parameter of the user clicking action, and if the coordinate parameter is within a monitoring range, sends the coordinate parameter to the management server, so as to obtain a real-time video of a position corresponding to the coordinate parameter. By displaying the monitoring range corresponding to each of the camera resource points, a user can view a real-time video of any position within the monitoring range and can rapidly obtain the real-time video of the position only through one clicking action without the need for a further operation, thereby greatly simplifying an operation procedure.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a flowchart of a video obtaining method according to an embodiment of the present invention;
FIG. 2 is a flowchart of another video obtaining method according to an embodiment of the present invention;
FIG. 3 is a flowchart of still another video obtaining method according to an embodiment of the present invention;
FIG. 4 is a flowchart of yet another video obtaining method according to an embodiment of the present invention;
FIG. 5 is a schematic structural diagram of a terminal device according to an embodiment of the present invention;
FIG. 6 is a schematic structural diagram of another terminal device according to an embodiment of the present invention;
FIG. 7 is a schematic structural diagram of a management server according to an embodiment of the present invention; and
FIG. 8 is a schematic structural diagram of another management server according to an embodiment of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

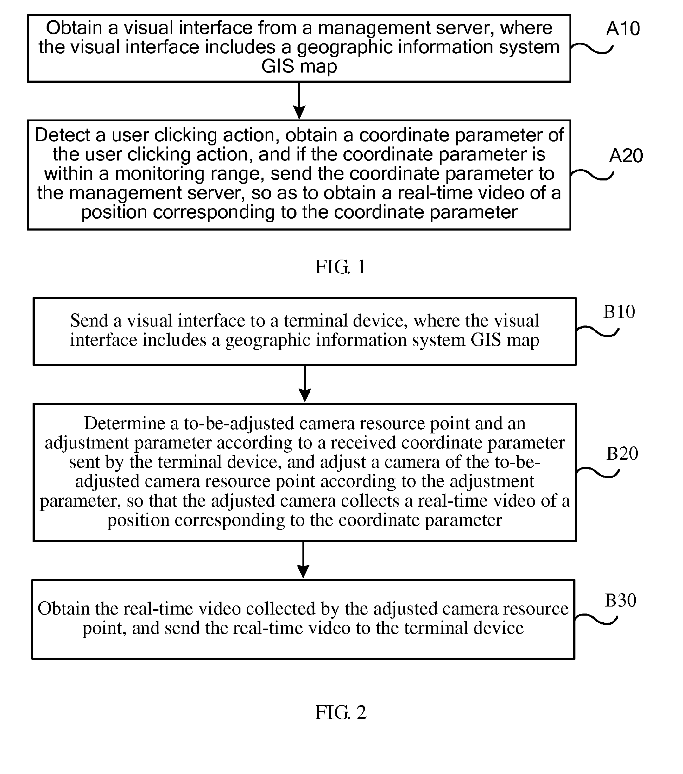

FIG. 1 is a flowchart of a video obtaining method according to an embodiment of the present invention. As shown in FIG. 1, the video obtaining method provided in this embodiment is specifically applicable to a processing procedure for a user to view a real-time video of a certain position. The video obtaining method provided in this embodiment may be executed by a terminal device, and the terminal device may specifically be a device having a processor and a screen, such as a personal computer, a notebook computer, a mobile phone, and a tablet computer. The video obtaining method provided in this embodiment specifically includes:

Step A10: Obtain a visual interface from a management server, where the visual interface includes a geographic information system GIS map, and a plurality of camera resource points and a monitoring range corresponding to each of the camera resource points are displayed on the GIS map.

Step A20: Detect a user clicking action, obtain a coordinate parameter of the user clicking action, and if the coordinate parameter is within a monitoring range, send the coordinate parameter to the management server, so as to obtain a real-time video of a position corresponding to the coordinate parameter.

Specifically, a user may establish a connection to a management server by using the terminal device, so as to obtain a corresponding service. The terminal device may send a map obtaining request to the management server. The management server sends a visual interface to the terminal device. The terminal device may display the visual interface on a screen. The visual interface includes a GIS map, and a plurality of camera resource points and a monitoring range corresponding to each of the camera resource points are displayed on the GIS map. The camera resource point may be represented by a camera icon or another identifier on the GIS map. The monitoring range corresponding to each of the camera resource points may be represented by a shadow area or a colored area on the GIS map as long as the monitoring range can be distinguished from other non-monitoring ranges. The monitoring range is used for representing an area which can be monitored by a camera of the camera resource point. The camera is installed on a site of a position of the camera resource point on the GIS map, and the management server can control the camera.

When the user needs to view a real-time video of a certain position, the user may click the position on the GIS map. A user clicking action may be completed with a mouse, or may be implemented through a touching action when the screen of the terminal device is a touchscreen. The terminal device detects the user clicking action, and obtains a coordinate parameter of the user clicking action, where the coordinate parameter is specifically coordinates of the position on the GIS map. When the GIS map is a three-dimensional map, the coordinate parameter may be three-dimensional coordinates. If the coordinate parameter is within a monitoring range, which indicates that the user needs to view the real-time video of the position, the coordinate parameter is sent to the management server, and the management server controls a camera of a camera resource point corresponding to the monitoring range and adjusts a position and a parameter of the camera, so as to collect the real-time video of the position. The management server sends the real-time video of the position to the terminal device, and the terminal device displays the real-time video to the user. A video displaying interface may pop up on the terminal device to display the real-time video.

If the coordinate parameter of the user clicking action is not within any monitoring range, the user clicking action does not need to be processed.

According to the video obtaining method provided in this embodiment, a terminal device obtains a visual interface from a management server, where the visual interface includes a geographic information system GIS map, and a plurality of camera resource points and a monitoring range corresponding to each of the camera resource points are displayed on the GIS map; and the terminal device detects a user clicking action, obtains a coordinate parameter of the user clicking action, and if the coordinate parameter is within a monitoring range, sends the coordinate parameter to the management server, so as to obtain a real-time video of a position corresponding to the coordinate parameter. By displaying the monitoring range corresponding to each of the camera resource points, a user can view a real-time video of any position within the monitoring range and can rapidly obtain the real-time video of the position only through one clicking action without the need for a further operation, thereby greatly simplifying an operation procedure.

In this embodiment, in step A20, after the sending the coordinate parameter to the management server, and before the obtaining a real-time video of a position corresponding to the coordinate parameter, the method may further include the following steps:

receiving a camera resource point list sent by the management server; and
selecting at least one camera resource point from the camera resource point list according to received selection information, and sending identifier information of the selected camera resource point to the management server.

When cameras are densely installed in a certain area, an overlap between monitoring ranges of a plurality of cameras may exist. When the coordinate parameter of a user clicking action correspondingly happens to be in the overlap, the coordinate parameter falls within monitoring ranges of a plurality of camera resource points, the management server generates a camera resource point list and sends the camera resource point list to the terminal device, for a user to select a camera resource point. The camera resource point list may specifically include names of the camera resource points, device information of the cameras, and information such as straight-line distances between the cameras and the viewed position, so as to provide reference for the user. The user may select one or more camera resource points from the camera resource point list; the terminal device sends identifier information of the camera resource point selected by the user to the management server; and the management server adjusts a camera of the camera resource point selected by the user.

FIG. 2 is a flowchart of another video obtaining method according to an embodiment of the present invention. As shown in FIG. 2, the video obtaining method provided in this embodiment is specifically applicable to a processing procedure for a user to view a real-time video of a certain position, and may be implemented in cooperation with the embodiment shown in FIG. 1. The video obtaining method provided in this embodiment may be executed by a management server, and the management server may specifically be one of various computer devices having a processor.

The video obtaining method provided in this embodiment specifically includes:

Step B10: Send a visual interface to a terminal device, where the visual interface includes a geographic information system GIS map, and a plurality of camera resource points and a monitoring range corresponding to each of the camera resource points are displayed on the GIS map.

Step B20: Determine a to-be-adjusted camera resource point and an adjustment parameter according to a received coordinate parameter sent by the terminal device, and adjust a camera of the to-be-adjusted camera resource point according to the adjustment parameter, so that the adjusted camera collects a real-time video of a position corresponding to the coordinate parameter.

Step B30: Obtain the real-time video collected by the adjusted camera resource point, and send the real-time video to the terminal device.

Specifically, the management server may send a visual interface to a terminal device according to a map obtaining request of the terminal device. The visual interface includes a GIS map, and a plurality of camera resource points and a monitoring range corresponding to each of the camera resource points are displayed on the GIS map. The camera resource points and monitoring ranges of the camera resource points may be preset, and each of the camera resource points is corresponding to a camera on one site. A position of a camera resource point on the GIS map is an actual position of a camera. When a camera is installed on a site, a monitoring range of the camera may be determined according to installation information of the camera and device information of the camera, and a camera resource point and a monitoring range of the camera resource point are identified on the GIS map.

When a user needs to view a real-time video of a certain position, the user may click the position on the GIS map. The terminal device detects a user clicking action, obtains a coordinate parameter of the user clicking action, and if the coordinate parameter is within a monitoring range, which indicates that the user needs to view the real-time video of the position, sends the coordinate parameter to the management server.

The management server determines, according to the coordinate parameter, a monitoring range where the coordinate parameter is located and a camera resource point corresponding to the monitoring range, where the camera resource point is a to-be-adjusted camera resource point. Information of the to-be-adjusted camera resource point is known; and an adjustment parameter can be calculated according to the information of the to-be-adjusted camera resource point and coordinate information of a to-be-viewed position. The management server controls a camera of the to-be-adjusted camera resource point according to the adjustment parameter, so that the camera collects a real-time video of the to-be-viewed position. The management server obtains the real-time video collected by the camera, and sends the video to the terminal device.

In an actual implementation process, in order to reduce processing pressure of a management server, a forwarding server may be disposed. Therefore, after adjusting a camera, the management server may send information of the adjusted camera and information of a terminal device to the forwarding server. For example, the information of the camera is a serial number, an IP address, and a channel number of the camera, and the information of the terminal device is an IP address of the terminal device. The forwarding server separately establishes connections to the camera and the terminal device, and sends the real-time video to the terminal device.

According to the video obtaining method provided in this embodiment, a management server sends a visual interface to a terminal device, where the visual interface includes a geographic information system GIS map, and a plurality of camera resource points and a monitoring range corresponding to each of the camera resource points are displayed on the GIS map; the management server determines a to-be-adjusted camera resource point and an adjustment parameter according to a received coordinate parameter sent by the terminal device, and adjusts a camera of the to-be-adjusted camera resource point according to the adjustment parameter, so that the adjusted camera collects a real-time video of a position corresponding to the coordinate parameter; and the management server obtains the real-time video collected by the adjusted camera resource point, and sends the real-time video to the terminal device. By displaying the monitoring range corresponding to each of the camera resource points, a user can view a real-time video of any position within the monitoring range and can rapidly obtain the real-time video of the position only through one clicking action without the need for a further operation, thereby greatly simplifying an operation procedure.

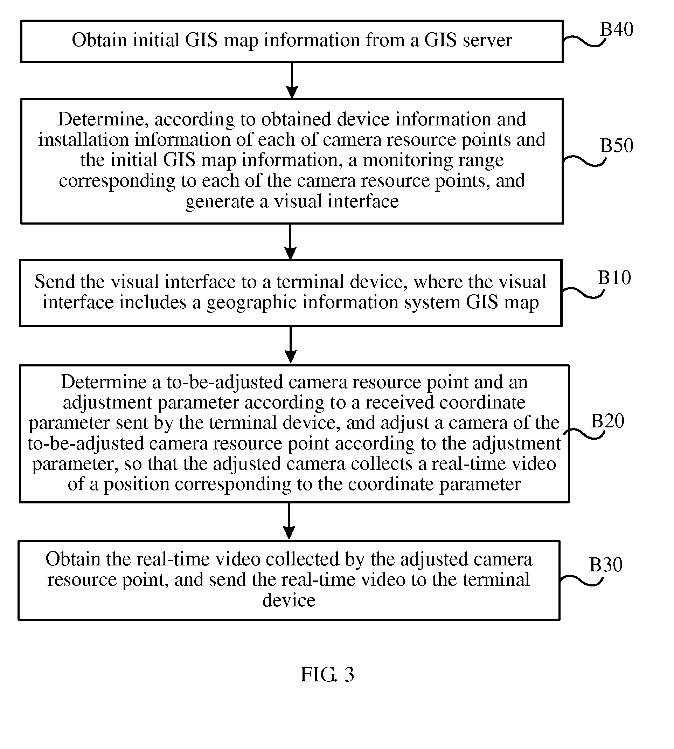

FIG. 3 is a flowchart of still another video obtaining method according to an embodiment of the present invention. As shown in FIG. 3, a monitoring range corresponding to each of camera resource points that is displayed on a GIS map may be preset. Therefore, in this embodiment, further, before step B10 of sending a visual interface to a terminal device, the method may further include:

Step B40: Obtain initial GIS map information from a GIS server.

Step B50: Determine, according to obtained device information and installation information of each of the camera resource points and the initial GIS map information, the monitoring range corresponding to each of the camera resource points, and generate the visual interface.

Specifically, a GIS server may provide a GIS map service, and a management server may obtain initial GIS map information from the GIS server, where the initial GIS map information is an initial GIS map. Device information and installation information of each of camera resource points may specifically be input by an operator, or may be obtained from an Internet of Things information server managing these cameras. A camera resource point is corresponding to a camera on one site. The device information may specifically include a type, a monitoring angle, a zoom factor, and the like, of a camera, and the installation information may specifically include an installation position, surrounding environment information, and the like, of a camera. According to installation information of a camera, a camera resource point corresponding to the camera is set, in the form of an icon or another identifier, on the GIS map. According to device information and installation information of a camera, a range which can be monitored by the camera may be determined, and the monitoring range is identified on the GIS map.

In this embodiment, step B50 of determining, according to obtained device information and installation information of each of the camera resource points and the initial GIS map information, the monitoring range corresponding to each of the camera resource points may specifically include:

for each of the camera resource points, if it is recognized, according to the device information, that a camera of the camera resource point is a dome camera, determining a monitoring angle of the dome camera, determining position coordinate information of the dome camera according to the installation information, and determining a monitoring range of the dome camera according to the monitoring angle and the position coordinate information of the dome camera and the initial GIS map information; or if it is recognized, according to the device information, that a camera of the camera resource point is a box camera, determining position coordinate information and an installation angle of the box camera according to the installation information, and determining a monitoring range of the box camera according to the position coordinate information and the installation angle of the box camera and the initial GIS map information.

Specifically, when a plurality of types of cameras exists in a network system, different methods may be used to determine monitoring ranges of different types of cameras.

Specifically, the following method may be used to determine a monitoring range of each of the camera resource points: recognizing a type of a camera of the camera resource point according to device information, and if the camera is a dome camera, determining a monitoring angle of the dome camera, where the monitoring angle of the dome camera may be 360° or may be less than 360°; determining position coordinate information of the dome camera according to installation information of the dome camera; and determining a monitoring range of the dome camera according to the monitoring angle and the position coordinate information of the dome camera and the initial GIS map information.

A process of determining the monitoring range of the dome camera is described in detail in the following.

Coordinates of any point on the GIS map are (Xn, Yn, Zn), and coordinates of an installation position of the dome camera are (x1, y1, z1+h), where Z1 is a sea level altitude corresponding to the installation position, and h is an installation height.

If the monitoring angle of the dome camera is 360°, the monitoring range of the dome camera may be determined by using the following formulas:

$$(Xn-x1)^2 + (Yn-y1)^2 \leq L^2, \text{ and } Zn \leq z1+h;$$

and

a range formed by coordinates (Xn, Yn, Zn) conforming to the formulas is the monitoring range of the dome camera.

If the monitoring angle of the dome camera is less than 360°, and it is assumed that the monitoring angle is A, angles between boundaries of the monitoring angle of the dome camera and a positive direction of the GIS map may be determined according to the installation information of the dome camera, where the positive direction of the GIS map is specifically east. For example, if an angle between the left boundary of the monitoring angle and the positive direction of the GIS map is B (0-360°), an angle between the right boundary and the positive direction of the GIS map is B-A, and if B-A is a negative number, a value of B-A+360° is taken.

The monitoring range of the dome camera may be determined by using the following formulas:

$(Xn-x1)^2+(Yn-y1)^2 \leq L^2$, and $Zn \leq z1+h$, where L is a horizontal coverage radius of the dome camera, where the horizontal coverage radius is obtained through calculation according to a focal length of the dome camera;

when B-A>0, B-A$\leq$arctan(Yn-y1)/(Xn-x1)$\leq$B;

when B-A<0, B-A+360$\leq$arctan(Yn-y1)/(Xn-x1)$\leq$360,

or 0$\leq$arctan(Yn-y1)/(Xn-x1)$\leq$B; and

it is assumed C=arctan(Yn-y1)/(Xn-x1), and when Yn-y1>0, a value less than 180° is taken for C, or when Yn-y1<0, a value ranging from 180° to 360° is taken for C.

If the camera is a box camera, because a box camera cannot rotate or zoom after being installed, a range which can be monitored by the box camera is relatively fixed. Therefore, the range which may be monitored by the box camera may be determined according to position coordinate information and an installation angle of the box camera.

In an actual implementation process, because it is difficult to measure an installation angle of a box camera is not permitted, a monitoring range may also be estimated according to the installation angle.

In this embodiment, other obstructions may exist in a surrounding environment of an installation site of a camera, and these obstructions affect a monitoring range of the camera. Therefore, when a monitoring range of a camera is determined, an effect of an obstruction on the monitoring range may be considered, so as to improve accuracy of the monitoring range.

When the camera is a dome camera, the determining a monitoring range of the dome camera according to the monitoring angle and the position coordinate information of the dome camera and the initial GIS map information may specifically include:

determining a theoretical monitoring range of the dome camera according to the monitoring angle and the position coordinate information of the dome camera, determining, according to the initial GIS map information, whether an obstruction exists within the theoretical monitoring range of the dome camera, and if an obstruction exists, correcting the theoretical monitoring range of the dome camera according to position information of the obstruction, and generating the monitoring range of the dome camera.

Whether an obstruction exists within the monitoring range of the dome camera is determined, where the obstruction may specifically be a protruding building, a facility, or the like. If an obstruction exists within the monitoring range of the dome camera, the determined monitoring range of the dome camera in the foregoing embodiment is a theoretical monitoring range, and the theoretical monitoring range is corrected.

For example, (Xn, Yn, Zn) are coordinates of any point within the theoretical monitoring range, and coordinates of an installation position of the dome camera are (x1, y1, z1+h), where Z1 is a sea level altitude corresponding to the installation position, and h is an installation height.

A formula for horizontal coordinates of all points between the point and the dome camera is y=(Yn-y1)/(Xn-x1), where x is within a range from x1 to Xn;

a height h1 is a difference between a height observable by the dome camera at a point of which horizontal coordinates are (x, y) when the dome camera observes the point (Xn, Yn, Zn) and a height of the observed point (Xn, Yn, Zn);

h1 is calculated by using the following formula:

$$\sqrt{(Xn-x1)^2+(Yn-y1)^2} / \sqrt{(Xn-x)^2+(Yn-y1)^2} = (z1+h-Zn)/h1 ;$$

heights of all points between the point and the dome camera are extracted through the initial GIS map information, that is, heights information z of all points of which horizontal coordinates conform to the formula y=(Yn-y1)/(Xn-x1)x are extracted, where x is within a range from x1 to Xn;

if z>Zn+h1, it indicates that when the dome camera observes the point (Xn, Yn, Zn), an obstruction exists between the dome camera and the point; or

if z<Zn+h1, it indicates that when the dome camera observes the point (Xn, Yn, Zn), no obstruction exists between the dome camera and the point.

The theoretical monitoring range of the dome camera may be corrected by using the foregoing method, so as to generate an actual monitoring range.

When the camera is a box camera, the determining a monitoring range of the box camera according to the position coordinate information of the box camera and the initial GIS map information may specifically include:

determining a theoretical monitoring range of the box camera according to the position coordinate information of the box camera, determining, according to the initial GIS map information, whether an obstruction exists within the theoretical monitoring range of the box camera, and if an obstruction exists, correcting the theoretical monitoring range of the box camera according to position information of the obstruction, and generating the monitoring range of the box camera.

A method for determining whether an obstruction exists within the monitoring range of the box camera may specifically be similar to the determining method for the dome camera, which is not repeated herein.

In an actual application, if a camera is installed indoors, a monitoring range of the camera may be affected by surrounding walls; and in this case, the monitoring range may be set according to a spatial structure of a building.

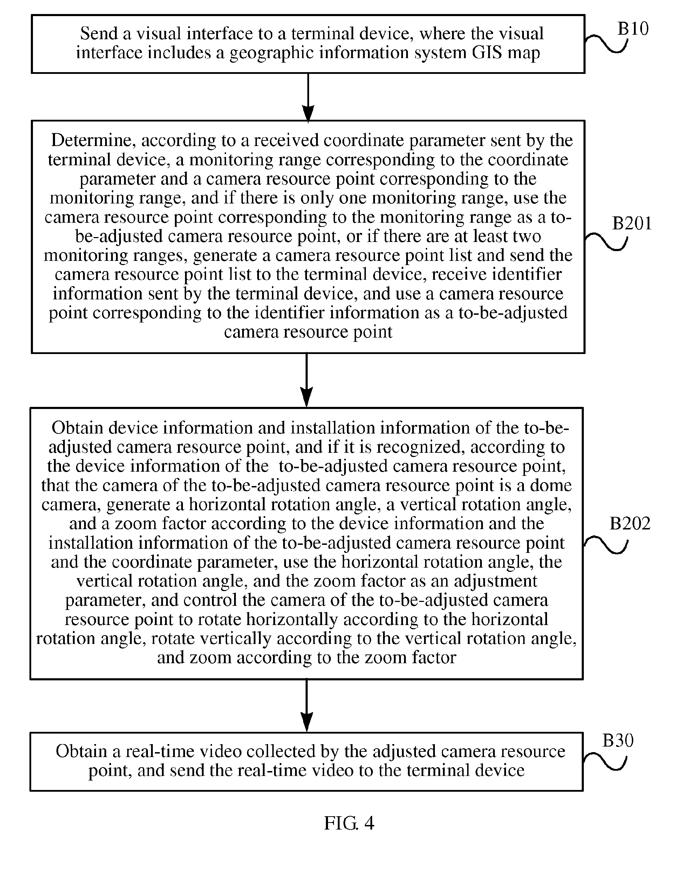

FIG. 4 is a flowchart of yet another video obtaining method according to an embodiment of the present invention. As shown in FIG. 4, in this embodiment, step B20 of determining a to-be-adjusted camera resource point and an adjustment parameter according to a received coordinate parameter sent by the terminal device, and adjusting a camera of the to-be-adjusted camera resource point according to the adjustment parameter may specifically include:

Step B201: Determine, according to the received coordinate parameter sent by the terminal device, a monitoring range corresponding to the coordinate parameter and a camera resource point corresponding to the monitoring range, and if there is only one monitoring range, use the camera resource point corresponding to the monitoring range as the to-be-adjusted camera resource point, or if there are at least two monitoring ranges, generate a camera resource point list and send the camera resource point list to the terminal device, receive identifier information sent by the terminal device, and use a camera resource point corresponding to the identifier information as the to-be-adjusted camera resource point.

The management server determines, according to the received coordinate parameter, a monitoring range where the coordinate parameter is located and a camera resource point corresponding to the monitoring range. If there is only one monitoring range where the coordinate parameter is located, a camera resource point corresponding to the monitoring range is the to-be-adjusted camera resource point. If there are at least two monitoring ranges where the coordinate parameter is located, a camera resource point list is generated by camera resource points corresponding to the at least two monitoring ranges, and the camera resource point list is sent to the device terminal for a user to perform selection. The identifier information sent by the terminal device is used for indicating a camera resource point selected by the user.

Step B202: Obtain device information and installation information of the to-be-adjusted camera resource point, and if it is recognized, according to the device information of the adjusted camera resource point that the camera of the to-be-adjusted camera resource point is a dome camera, generate a horizontal rotation angle, a vertical rotation angle, and a zoom factor according to the device information and the installation information of the to-be-adjusted camera resource point and the coordinate parameter, use the horizontal rotation angle, the vertical rotation angle, and the zoom factor as the adjustment parameter, and control the camera of the to-be-adjusted camera resource point to rotate horizontally according to the horizontal rotation angle, rotate vertically according to the vertical rotation angle, and zoom according to the zoom factor.

If the camera of the to-be-adjusted camera resource point is a dome camera, an observation angle of the dome camera may be adjusted and the dome camera may be zoomed. Coordinates of an installation position of the dome camera are $(x1, y1, z1+h)$, a coordinate parameter is $(x2, y2, z2)$, a current horizontal observation angle of the dome camera is $\beta$, and a vertical observation angle is b.

A horizontal rotation angle $\beta$-$\alpha$ may be generated according to the following formulas:

$$\text{if } x2>x1, \text{ and } y2>y1, \alpha=\arctan(y2-y1)/(x2-x1), \text{ and } \alpha<90°;$$

$$\text{if } x2<x1, \text{ and } y2>y1, \alpha=\arctan(y2-y1)/(x2-x1), \text{ and } 90°<\alpha<180°;$$

$$\text{if } x2<x1, \text{ and } y2<y1, \alpha=\arctan(y2-y1)/(x2-x1), \text{ and } 180°<\alpha<270°;$$

$$\text{if } x2>x1, \text{ and } y2<y1, \alpha=\arctan(y2-y1)/(x2-x1), \text{ and } 270°<\alpha<360°;$$

if $\beta$-$\alpha$ is a positive number and is less than 180°, the dome camera rotates clockwise by $\beta$-$\alpha$;
if $\beta$-$\alpha$ is a positive number and is greater than 180°, the dome camera rotates counterclockwise by 360°-($\beta$-$\alpha$);
if $\beta$-$\alpha$ is a negative number and is greater than -180°, the dome camera rotates counterclockwise by $\beta$-$\alpha$; or

if β-α is a negative number and is less than -180°, the dome camera rotates clockwise by 360°+(β-α).

A vertical rotation angle b-a may be generated according to the following formula:

$$a = \arctan(z1 + h - z2) / \sqrt{(x1 - x2)^2 + (y1 - y2)^2} \,,$$

where z1+h>z2, that is, an installation height of the dome camera is higher than an observation point;
if b-a is a positive number, the dome camera rotates upward by a corresponding angle; or
if b-a is a negative number, the dome camera rotates downward by a corresponding angle.

A zoom factor n may be generated according to the following formula:

$$n = m\sqrt{(x1 - x2)^2 + (y1 - y2)^2 + (z1 + h - z2)^2} / L,$$

where m is a largest factor of the dome camera, and if a calculation result of n is not an integer, a value of a closest integer is taken, and if n>m, a value of m is taken.

If the camera of the to-be-adjusted camera resource point is a box camera, and if the box camera is uncontrollable, the box camera does not need to be adjusted, and a real-time video collected by the box camera may be directly obtained.

In an actual application, an effect of an obstruction on a monitoring range of a camera may not be predetermined. When a user intends to view a real-time video of a certain position, it is determined, in real time according to a coordinate parameter corresponding to a user clicking action, whether an obstruction exists between a camera and the position, and the user is prompted for a result of the determining.

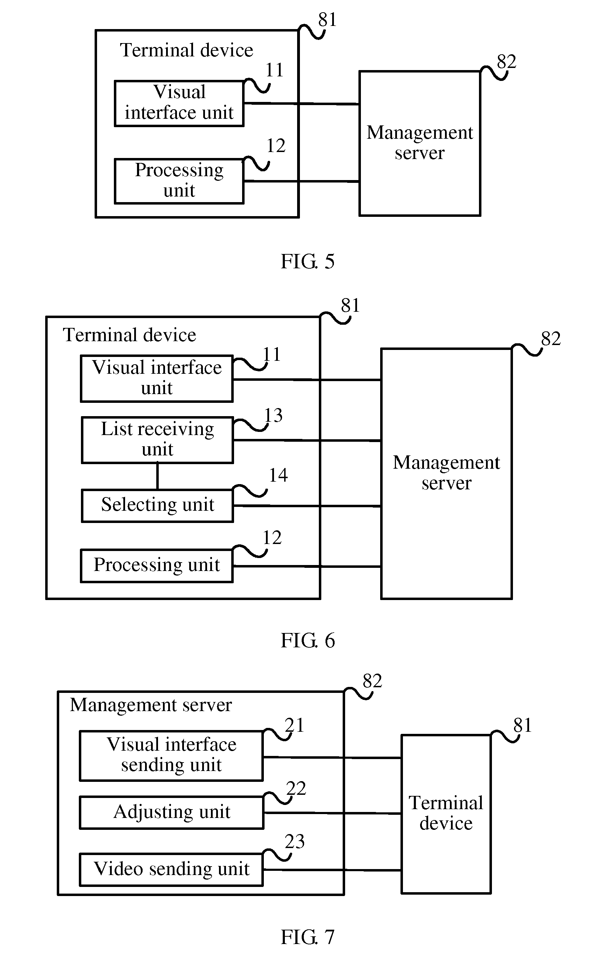

FIG. 5 is a schematic structural diagram of a terminal device according to an embodiment of the present invention. As shown in FIG. 5, a terminal device 81 provided in this embodiment can implement steps of the video obtaining method that is applicable to the terminal device 81 and provided in any one of the embodiments of the present invention, which are not repeated herein. The terminal device 81 provided in this embodiment specifically includes a visual interface unit 11 and a processing unit 12. The visual interface unit 11 is configured to obtain a visual interface from a management server 82, where the visual interface includes a geographic information system GIS map, and a plurality of camera resource points and a monitoring range corresponding to each of the camera resource points are displayed on the GIS map. The processing unit 12 is configured to detect a user clicking action, obtain a coordinate parameter of the user clicking action, and if the coordinate parameter is within a monitoring range, send the coordinate parameter to the management server 82, so as to obtain a real-time video of a position corresponding to the coordinate parameter.

According to the terminal device 81 provided in this embodiment, a visual interface unit 11 obtains a visual interface from a management server 82, where the visual interface includes a geographic information system GIS map, and a plurality of camera resource points and a monitoring range corresponding to each of the camera resource points are displayed on the GIS map; and a processing unit 12 detects a user clicking action, obtains a coordinate parameter of the user clicking action, and if the coordinate parameter is within a monitoring range, sends the coordinate parameter to the management server 82, so as to obtain a real-time video of a position corresponding to the coordinate parameter. By displaying the monitoring range corresponding to each of the camera resource points, a user can view a real-time video of any position within the monitoring range and can rapidly obtain the real-time video of the position only through one clicking action without the need for a further operation, thereby greatly simplifying an operation procedure.

FIG. 6 is a schematic structural diagram of another terminal device according to an embodiment of the present invention. As shown in FIG. 6, in this embodiment, the terminal device 81 may further include a list receiving unit 13 and a selecting unit 14. The list receiving unit 13 is configured to receive a camera resource point list sent by the management server 82. The selecting unit 14 is configured to select at least one camera resource point from the camera resource point list according to received selection information, and send identifier information of the selected camera resource point to the management server 82. The user may perform selection according to information of an optional camera resource point in the camera resource point list, so as to obtain a preferred real-time video.

FIG. 7 is a schematic structural diagram of a management server according to an embodiment of the present invention. As shown in FIG. 7, a management server 82 provided in this embodiment can specifically implement steps of the video obtaining method that is applicable to the management server 82 and provided in any one of the embodiments of the present invention, which are not repeated herein. The management server 82 provided in this embodiment specifically includes a visual interface sending unit 21, an adjusting unit 22, and a video sending unit 23. The visual interface sending unit 21 is configured to send a visual interface to a terminal device 81, where the visual interface includes a geographic information system GIS map, and a plurality of camera resource points and a monitoring range corresponding to each of the camera resource points are displayed on the GIS map. The adjusting unit 22 is configured to determine a to-be-adjusted camera resource point and an adjustment parameter according to a received coordinate parameter sent by the terminal device 81, and adjust a camera of the to-be-adjusted camera resource point according to the adjustment parameter, so that the adjusted camera collects a real-time video of a position corresponding to the coordinate parameter. The video sending unit 23 is configured to obtain the real-time video collected by the adjusted camera resource point, and send the real-time video to the terminal device 81.

According to the management server 82 provided in this embodiment, a visual interface sending unit 21 sends a visual interface to a terminal device 81, where the visual interface includes a geographic information system GIS map, and a plurality of camera resource points and a monitoring range corresponding to each of the camera resource points are displayed on the GIS map; an adjusting unit 22 determines a to-be-adjusted camera resource point and an adjustment parameter according to a received coordinate parameter sent by the terminal device 81, and adjusts a camera of the to-be-adjusted camera resource point according to the adjustment parameter, so that the adjusted camera collects a real-time video of a position corresponding to the coordinate parameter; and a video sending unit 23 obtains the real-time video collected by the adjusted camera resource point, and sends the real-time video to the terminal device 81. By displaying the monitoring range corresponding to each of the camera resource points, a user can view a real-time video of any position within the monitoring range and can rapidly obtain the real-time video of the position only through one clicking action without the need for a further operation, thereby greatly simplifying an operation procedure.

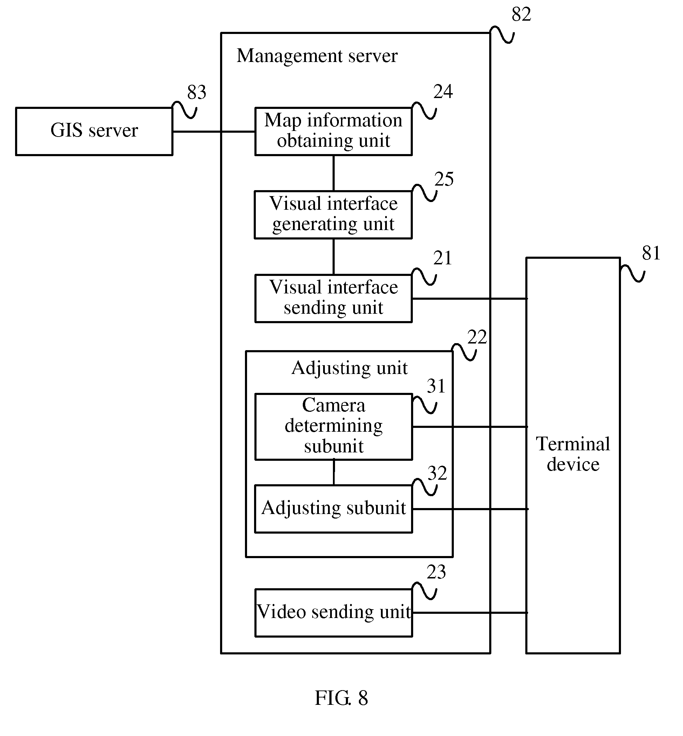

FIG. 8 is a schematic structural diagram of another management server according to an embodiment of the present invention. As shown in FIG. 8, in this embodiment, the management server 82 may further include a map information obtaining unit 24 and a visual interface generating unit 25. The map information obtaining unit 24 is configured to obtain initial GIS map information from a GIS server 83. The visual interface generating unit 25 is configured to determine, according to obtained device information and installation information of each of the camera resource points and the initial GIS map information, the monitoring range corresponding to each of the camera resource points, and generate the visual interface. The map information obtaining unit 24 and the visual interface generating unit 25 may pre-generate a visual interface including a GIS map which displays the camera resource points and the monitoring ranges of the camera resource points, and may also update the visual interface according to newly added camera information.

In this embodiment, the visual interface generating unit 25 is further configured to: for each of the camera resource points, if it is recognized, according to the device information, that a camera of the camera resource point is a dome camera, determine a monitoring angle of the dome camera, determine position coordinate information of the dome camera according to the installation information, and determine a monitoring range of the dome camera according to the monitoring angle and the position coordinate information of the dome camera and the initial GIS map information; or if it is recognized, according to the device information, that a camera of the camera resource point is a box camera, determine position coordinate information and an installation angle of the box camera according to the installation information, and determine a monitoring range of the box camera according to the position coordinate information and the installation angle of the box camera and the initial GIS map information.

In this embodiment, the visual interface generating unit 25 is further configured to determine a theoretical monitoring range of the dome camera according to the monitoring angle and the position coordinate information of the dome camera, and determine, according to the initial GIS map information, whether an obstruction exists within the theoretical monitoring range of the dome camera, and if an obstruction exists, correct the theoretical monitoring range of the dome camera according to position information of the obstruction, and generate the monitoring range of the dome camera; or determine a theoretical monitoring range of the box camera according to the position coordinate information of the box camera, determine, according to the initial GIS map information, whether an obstruction exists within the theoretical monitoring range of the box camera, and if an obstruction exists, correct the theoretical monitoring range of the box camera according to position information of the obstruction, and generate the monitoring range of the box camera.

In this embodiment, the adjusting unit 22 may include a camera determining subunit 31 and an adjusting subunit 32. The camera determining subunit 31 is configured to determine, according to the received coordinate parameter sent by the terminal device 81, a monitoring range corresponding to the coordinate parameter and a camera resource point corresponding to the monitoring range, and if there is only one monitoring range, use the camera resource point corresponding to the monitoring range as the to-be-adjusted camera resource point, or if there are at least two monitoring ranges, generate a camera resource point list and send the camera resource point list to the terminal device 81, receive identifier information sent by the terminal device 81, and use a camera resource point corresponding to the identifier information as the to-be-adjusted camera resource point. The adjusting subunit 32 is configured to obtain device information and installation information of the to-be-adjusted camera resource point, and if it is recognized, according to the device information of the adjusted camera resource point that the camera of the to-be-adjusted camera resource point is a dome camera, generate a horizontal rotation angle, a vertical rotation angle, and a zoom factor according to the device information and the installation information of the to-be-adjusted camera resource point and the coordinate parameter, use the horizontal rotation angle, the vertical rotation angle, and the zoom factor as the adjustment parameter, and control the camera of the to-be-adjusted camera resource point to rotate horizontally according to the horizontal rotation angle, rotate vertically according to the vertical rotation angle, and zoom according to the zoom factor.

An embodiment of the present invention provides a video obtaining system. The video obtaining system includes the terminal device provided in any one of the embodiments of the present invention and the management server provided in any one of the embodiments of the present invention.

The video obtaining system provided in this embodiment is applicable to a security surveillance system. In the security surveillance system, a camera is installed on a site which needs to be monitored. A management server may obtain initial GIS map information from a GIS server, and display a camera resource point and a monitoring range of the camera resource point on a GIS map. A user may interact with the management server by using a terminal device. The management server provides a visual interface for the terminal device, where the visual interface includes the GIS map on which the camera resource point and the monitoring range of the camera resource points are displayed. The camera resource point may be represented by a camera icon, and the monitoring range may be represented by a shadow area. The user may see, by using the terminal device, a camera icon and a monitoring range which may be monitored by the camera, where the camera icon and the monitoring range are displayed on the GIS map. When the user intends to view a real-time video of a certain position, the user directly clicks any point within a monitoring range of a camera on the GIS map. A real-time video of the camera then pops up. If the camera is a dome camera, the dome camera rotates, under the control of a management system, to the position which the user intends to view, and appropriately zooms, so as to obtain a clear real-time video.

A storage server may further be disposed in the security surveillance system, so as to store real-time videos collected by various cameras.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the scope of the technical solutions in the embodiments of the present invention.

**Claims**

1. A video obtaining method, comprising:

    obtaining a visual interface from a management server, wherein the visual interface comprises a geographic information system GIS map, and a plurality of camera resource points and a monitoring range corresponding to each of the camera resource points are displayed on the GIS map; and
    detecting a user clicking action, obtaining a coordinate parameter of the user clicking action, and if the coordinate parameter is within a monitoring range, sending the coordinate parameter to the management server, so as to obtain a real-time video of a position corresponding to the coordinate parameter.

2. The video obtaining method according to claim 1, wherein after the sending the coordinate parameter to the management server and before the obtaining a real-time video of a position corresponding to the coordinate parameter, the method further comprises:

    receiving a camera resource point list sent by the management server; and
    selecting at least one camera resource point from the camera resource point list according to received selection information, and sending identifier information of the selected camera resource point to the management server.

3. A video obtaining method, comprising:

    sending a visual interface to a terminal device, wherein the visual interface comprises a geographic information system GIS map, and a plurality of camera resource points and a monitoring range corresponding to each of the camera resource points are displayed on the GIS map;

determining a to-be-adjusted camera resource point and an adjustment parameter according to a received coordinate parameter sent by the terminal device, and adjusting a camera of the to-be-adjusted camera resource point according to the adjustment parameter, so that the adjusted camera collects a real-time video of a position corresponding to the coordinate parameter; and

obtaining the real-time video collected by the adjusted camera resource point, and sending the real-time video to the terminal device.

4. The video obtaining method according to claim 3, wherein before the sending a visual interface to a terminal device, the method further comprises:

obtaining initial GIS map information from a GIS server; and

determining, according to obtained device information and installation information of each of the camera resource points and the initial GIS map information, the monitoring range corresponding to each of the camera resource points, and generating the visual interface.

5. The video obtaining method according to claim 4, wherein the determining, according to obtained device information and installation information of each of the camera resource points and the initial GIS map information, the monitoring range corresponding to each of the camera resource points comprises:

for each of the camera resource points, if it is recognized, according to the device information, that a camera of the camera resource point is a dome camera, determining a monitoring angle of the dome camera, determining position coordinate information of the dome camera according to the installation information, and determining a monitoring range of the dome camera according to the monitoring angle and the position coordinate information of the dome camera and the initial GIS map information;

or if it is recognized, according to the device information, that a camera of the camera resource point is a box camera, determining position coordinate information and an installation angle of the box camera according to the installation information, and determining a monitoring range of the box camera according to the position coordinate information and the installation angle of the box camera and the initial GIS map information.

6. The video obtaining method according to claim 5, wherein
the determining a monitoring range of the dome camera according to the monitoring angle and the position coordinate information of the dome camera and the initial GIS map information comprises:

determining a theoretical monitoring range of the dome camera according to the monitoring angle and the position coordinate information of the dome camera, determining, according to the initial GIS map information, whether an obstruction exists within the theoretical monitoring range of the dome camera, and if an obstruction exists, correcting the theoretical monitoring range of the dome camera according to position information of the obstruction, and generating the monitoring range of the dome camera; and

the determining a monitoring range of the box camera according to the position coordinate information of the box camera and the initial GIS map information comprises:

determining a theoretical monitoring range of the box camera according to the position coordinate information of the box camera, determining, according to the initial GIS map information, whether an obstruction exists within the theoretical monitoring range of the box camera, and if an obstruction exists, correcting the theoretical monitoring range of the box camera according to position information of the obstruction, and generating the monitoring range of the box camera.

7. The video obtaining method according to claim 3, wherein the determining a to-be-adjusted camera resource point and an adjustment parameter according to a received coordinate parameter sent by the terminal device, and adjusting a camera of the to-be-adjusted camera resource point according to the adjustment parameter comprises:

determining, according to the received coordinate parameter sent by the terminal device, a monitoring range corresponding to the coordinate parameter and a camera resource point corresponding to the monitoring range, and if there is only one monitoring range, using the camera resource point corresponding to the monitoring range as the to-be-adjusted camera resource point, or if there are at least two monitoring ranges, generating a camera resource point list and sending the camera resource point list to the terminal device, receiving identifier information sent by the terminal device, and using a camera resource point corresponding to the identifier information as the to-be-adjusted camera resource point; and

obtaining device information and installation information of the to-be-adjusted camera resource point, and if it is recognized, according to the device information of the adjusted camera resource point that the camera of the to-be-adjusted camera resource point is a dome camera, generating a horizontal rotation angle, a vertical rotation angle, and a zoom factor according to the device information and the installation information of the to-be-adjusted camera resource point and the coordinate parameter, using the horizontal rotation angle, the vertical rotation angle, and the zoom factor as the adjustment parameter, and controlling the camera of the to-be-adjusted camera resource point to rotate horizontally according to the horizontal rotation angle, rotate vertically according to the vertical rotation angle, and zoom according to the zoom factor.

8.  A terminal device, comprising:

a visual interface unit, configured to obtain a visual interface from a management server, wherein the visual interface comprises a geographic information system GIS map, and a plurality of camera resource points and a monitoring range corresponding to each of the camera resource points are displayed on the GIS map; and

a processing unit, configured to detect a user clicking action, obtain a coordinate parameter of the user clicking action, and if the coordinate parameter is within a monitoring range, send the coordinate parameter to the management server, so as to obtain a real-time video of a position corresponding to the coordinate parameter.

9.  The terminal device according to claim 8, further comprising:

a list receiving unit, configured to receive a camera resource point list sent by the management server; and

a selecting unit, configured to select at least one camera resource point from the camera resource point list according to received selection information, and send identifier information of the selected camera resource point to the management server.

10.  A management server, comprising:

a visual interface sending unit, configured to send a visual interface to a terminal device, wherein the visual interface comprises a geographic information system GIS map, and a plurality of camera resource points and a monitoring range corresponding to each of the camera resource points are displayed on the GIS map;

an adjusting unit, configured to determine a to-be-adjusted camera resource point and an adjustment parameter according to a received coordinate parameter sent by the terminal device, and adjust a camera of the to-be-adjusted camera resource point according to the adjustment parameter, so that the adjusted camera collects a real-time video of a position corresponding to the coordinate parameter; and

a video sending unit, configured to obtain the real-time video collected by the adjusted camera resource point, and send the real-time video to the terminal device.

11.  The management server according to claim 10, further comprising:

a map information obtaining unit, configured to obtain initial GIS map information from a GIS server; and

a visual interface generating unit, configured to determine, according to obtained device information and installation information of each of the camera resource points and the initial GIS map information, the monitoring range corresponding to each of the camera resource points, and generate the visual interface.

12.  The management server according to claim 11, wherein the visual interface generating unit is further configured to: for each of the camera resource points, if it is recognized, according to the device information, that a camera of the camera resource point is a dome camera, determine a monitoring angle of the dome camera, determine position coordinate information of the dome camera according to the installation information, and determine a monitoring range of the dome camera according to the monitoring angle and the position coordinate information of the dome camera and the initial GIS map information; or if it is recognized, according to the device information, that a camera of the camera resource point is a box camera, determine position coordinate information and an installation angle of the box camera according to the installation information, and determine a monitoring range of the box camera according to the position coordinate information and the installation angle of the box camera and the initial GIS map information.

13.  The management server according to claim 12, wherein:

the visual interface generating unit is further configured to determine a theoretical monitoring range of the dome camera according to the monitoring angle and the position coordinate information of the dome camera, and determine, according to the initial GIS map information, whether an obstruction exists within the theoretical monitoring range of the dome camera, and if an obstruction exists, correct the theoretical monitoring range of the dome camera according to position information of the obstruction, and generate the monitoring range of the dome camera; or determine a theoretical monitoring range of the box camera according to the position coordinate information of the box camera, determine, according to the initial GIS map information, whether an obstruction exists within the theoretical monitoring range of the box camera, and if an obstruction exists, correct the theoretical monitoring range of the box camera according to position information of the obstruction, and generate the monitoring range of the box camera.

14. The management server according to claim 10, wherein the adjusting unit comprises:

a camera determining subunit, configured to determine, according to the received coordinate parameter sent by the terminal device, a monitoring range corresponding to the coordinate parameter and a camera resource point corresponding to the monitoring range, and if there is only one monitoring range, use the camera resource point corresponding to the monitoring range as the to-be-adjusted camera resource point, or if there are at least two monitoring ranges, generate a camera resource point list and send the camera resource point list to the terminal device, receive identifier information sent by the terminal device, and use a camera resource point corresponding to the identifier information as the to-be-adjusted camera resource point; and

an adjusting subunit, configured to obtain device information and installation information of the to-be-adjusted camera resource point, and if it is recognized, according to the device information of the adjusted camera resource point, that the camera of the to-be-adjusted camera resource point is a dome camera, generate a horizontal rotation angle, a vertical rotation angle, and a zoom factor according to the device information and the installation information of the to-be-adjusted camera resource point and the coordinate parameter, use the horizontal rotation angle, the vertical rotation angle, and the zoom factor as the adjustment parameter, and control the camera of the to-be-adjusted camera resource point to rotate horizontally according to the horizontal rotation angle, rotate vertically according to the vertical rotation angle, and zoom according to the zoom factor.

15. A video obtaining system, comprising:

the terminal device according to claim 8 or 9 and the management server according to any one of claims 10 to 14.

Obtain a visual interface from a management server, where the visual interface includes a geographic information system GIS map — A10

Detect a user clicking action, obtain a coordinate parameter of the user clicking action, and if the coordinate parameter is within a monitoring range, send the coordinate parameter to the management server, so as to obtain a real-time video of a position corresponding to the coordinate parameter — A20

FIG. 1

Send a visual interface to a terminal device, where the visual interface includes a geographic information system GIS map — B10

Determine a to-be-adjusted camera resource point and an adjustment parameter according to a received coordinate parameter sent by the terminal device, and adjust a camera of the to-be-adjusted camera resource point according to the adjustment parameter, so that the adjusted camera collects a real-time video of a position corresponding to the coordinate parameter — B20

Obtain the real-time video collected by the adjusted camera resource point, and send the real-time video to the terminal device — B30

FIG. 2

| Obtain initial GIS map information from a GIS server | B40 |

↓

| Determine, according to obtained device information and installation information of each of camera resource points and the initial GIS map information, a monitoring range corresponding to each of the camera resource points, and generate a visual interface | B50 |

↓

| Send the visual interface to a terminal device, where the visual interface includes a geographic information system GIS map | B10 |

↓

| Determine a to-be-adjusted camera resource point and an adjustment parameter according to a received coordinate parameter sent by the terminal device, and adjust a camera of the to-be-adjusted camera resource point according to the adjustment parameter, so that the adjusted camera collects a real-time video of a position corresponding to the coordinate parameter | B20 |

↓

| Obtain the real-time video collected by the adjusted camera resource point, and send the real-time video to the terminal device | B30 |

FIG. 3

Send a visual interface to a terminal device, where the visual interface includes a geographic information system GIS map ⟩ B10

Determine, according to a received coordinate parameter sent by the terminal device, a monitoring range corresponding to the coordinate parameter and a camera resource point corresponding to the monitoring range, and if there is only one monitoring range, use the camera resource point corresponding to the monitoring range as a to-be-adjusted camera resource point, or if there are at least two monitoring ranges, generate a camera resource point list and send the camera resource point list to the terminal device, receive identifier information sent by the terminal device, and use a camera resource point corresponding to the identifier information as a to-be-adjusted camera resource point ⟩ B201

Obtain device information and installation information of the to-be-adjusted camera resource point, and if it is recognized, according to the device information of the to-be-adjusted camera resource point, that the camera of the to-be-adjusted camera resource point is a dome camera, generate a horizontal rotation angle, a vertical rotation angle, and a zoom factor according to the device information and the installation information of the to-be-adjusted camera resource point and the coordinate parameter, use the horizontal rotation angle, the vertical rotation angle, and the zoom factor as an adjustment parameter, and control the camera of the to-be-adjusted camera resource point to rotate horizontally according to the horizontal rotation angle, rotate vertically according to the vertical rotation angle, and zoom according to the zoom factor ⟩ B202

Obtain a real-time video collected by the adjusted camera resource point, and send the real-time video to the terminal device ⟩ B30

FIG. 4

EP 2 811 740 A1

FIG. 5

FIG. 6

FIG. 7

18

FIG. 8

| | INTERNATIONAL SEARCH REPORT | International application No. |
|---|---|---|
| | | PCT/CN2013/077183 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H04N; G06F; H04L; H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC: terminal, video, image, mobile, location, photography, monitor, coordinate, GIS, GPS, position, change, modify, resource, range, action, adjust, parameter, collection, geography information system

**C. DOCUMENTS CONSIDERED TO BE RELEVANT**

| Category* | Citation of document, with indication, where appropriate, of the relevant passages | Relevant to claim No. |
|---|---|---|
| X | CN 102447880 A (SHANGHAI TRIMAN INFORMATION & TECHNOLOGY CO., LTD.) 09 May 2012 (09.05.2012) description, paragraphs [0005] to [0030] and figures 1 and 2 | 1-15 |
| A | CN 101576926 A (ZHEJIANG UNIVERSITY et al.) 11 November 2009 (11.11.2009) the whole document | 1-15 |
| A | CN 102263933 A (HANGZHOU H3C TECHNOLOGIES CO., LTD.) 30 November 2011 (30.11.2011) the whole document | 1-15 |
| A | EP 2434457 A1 (KODAIRA ASSOCIATES INC.) 28 March 2012 (28.03.2012) the whole document | 1-15 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 September 2013 (02.09.2013) | 19 September 2013 (19.09.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Kai<br><br>Telephone No. (86-10) 62413305 |

Form PCT/ISA /210 (second sheet) (July 2009)

**INTERNATIONAL SEARCH REPORT**
Information on patent family members

| | International application No. |
|---|---|
| | PCT/CN2013/077183 |

| Patent Documents referred in the Report | Publication Date | Patent Family | Publication Date |
|---|---|---|---|
| CN 102447880 A | 09.05.2012 | None | |
| CN 101576926 A | 11.11.2009 | None | |
| CN 102263933 A | 30.11.2011 | None | |
| EP 2434457 A1 | 28.03.2012 | WO 2010134502 A1 | 25.11.2010 |
| | | JP 2012053896 A | 15.03.2012 |
| | | US 2012120069 A1 | 17.05.2012 |

Form PCT/ISA /210 (patent family annex) (July 2009)

## INTERNATIONAL SEARCH REPORT

| | International application No. |
| --- | --- |
| | PCT/CN2013/077183 |

**CLASSIFICATION OF SUBJECT MATTER:**

H04N 7/18 (2006.01) i

G06F 17/30 (2006.01) i

Form PCT/ISA /210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210189742